(19) Europäisches Patentamt
European Patent Office
Office européen des brevets

(11) **EP 2 504 211 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(21) Anmeldenummer: **10762640.0**

(22) Anmeldetag: **28.09.2010**

(51) Int Cl.:
*B60W 10/113* (2012.01)    *B60W 30/192* (2012.01)
*B60W 10/08* (2006.01)    *B60W 10/06* (2006.01)
*B60W 10/02* (2006.01)    *B60W 20/00* (2016.01)

(86) Internationale Anmeldenummer:
**PCT/EP2010/064311**

(87) Internationale Veröffentlichungsnummer:
**WO 2011/064018 (03.06.2011 Gazette 2011/22)**

(54) **VERFAHREN UND VORRICHTUNG ZUM BETREIBEN EINES HYBRIDFAHRZEUGES**

METHOD AND DEVICE FOR OPERATING A HYBRID VEHICLE

PROCÉDÉ ET DISPOSITIF POUR LE FONCTIONNEMENT D'UN VÉHICULE HYBRIDE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.11.2009 DE 102009047052**

(43) Veröffentlichungstag der Anmeldung:
**03.10.2012 Patentblatt 2012/40**

(73) Patentinhaber: **Robert Bosch GmbH**
**70442 Stuttgart (DE)**

(72) Erfinder: **FALKENSTEIN, Jens-Werner**
**73434 Aalen (DE)**

(56) Entgegenhaltungen:
**DE-A1- 10 327 306    DE-A1-102007 050 659**
**US-A1- 2005 139 035**

- **BERGER R ET AL: "ESG - Elektrisches Schaltgetriebe" ATZ AUTOMOBILTECHNISCHE ZEITSCHRIFT, VIEWEG PUBLISHING, WIESBADEN, DE, Bd. 107, Nr. 6, 1. Juni 2005 (2005-06-01), Seiten 488-493,495, XP001519133 ISSN: 0001-2785**

EP 2 504 211 B1

**Beschreibung**

Stand der Technik

Die Erfindung betrifft ein Verfahren zum Betreiben eines Hybridfahrzeuges, welches mindestens ein erstes und ein zweites Antriebsaggregat aufweist, bei welchem das zweite Antriebsaggregat durch wenigstens einen Teil des von dem ersten Antriebsaggregat aufgebrachten Antriebsmomentes gestartet wird, in dem eine zwischen dem ersten und dem zweiten Antriebsaggregat angeordnete Kupplung aus einem geöffneten in einen schlupfenden Zustand gebracht wird sowie eine Vorrichtung zur Durchführung des Verfahrens.

Fahrzeuge mit einer hybriden Antriebsstruktur weisen einen Verbrennungsmotor und ein weiteres Antriebsaggregat auf, welches als Elektromotor oder Hydraulikmotor ausgebildet sein kann. So kann das Antriebsmoment während des Fahrbetriebes des Hybridfahrzeuges entweder von beiden Antriebsaggregaten oder nur von einem Antriebsaggregat aufgebracht werden.

Der Start des Verbrennungsmotors erfolgt bei einem elektrischen Fahrbetrieb des Hybridfahrzeuges durch Ankoppeln an einen Antriebsstrang, welcher von dem Elektromotor angetrieben wird. Die Notwendigkeit zum Start des Verbrennungsmotors besteht beispielsweise darin, dass der Fahrer mehr Leistung anfordert, als vom Elektromotor aufgebracht werden kann, oder wenn der Energieinhalt eines Energiespeichers, welcher den Elektromotor mit Energie versorgt, zu stark abgefallen ist.

Ein zum Start des Verbrennungsmotors erforderliches Startdrehmoment bzw. eine Startleistung muss von dem weiteren Antriebsaggregat, wie z.B. dem Elektromotor, aufgebracht werden, welches über eine schlupfende Kupplung auf den Verbrennungsmotor übertragen wird. Eine schlupfend betriebene Kupplung weist Ungenauigkeiten auf. Solche Ungenauigkeiten bestehen in variierenden Reibkoeffizienten der Kupplungsbeläge infolge Verschleiß oder Temperaturänderungen, in hydraulischen bzw. mechanischen Abweichungen im Betätigungssystem der Kupplungen oder in Hysteresen, Signallaufzeiten und Alterungserscheinungen in der Ansteuerung. Somit ist das von der schlupfend betriebenen Kupplung übertragene Kupplungsmoment nicht exakt bekannt und kann auch nicht exakt eingestellt werden. Dies verhindert eine genaue Kompensation des Start-Drehmomentes bzw. der Start-Leistung des Verbrennungsmotors durch das weitere Antriebsaggregat. Als Folge davon wirkt der nichtkompensierte Anteil als Störung auf den Antriebsstrang, die Drehschwingungen anregt und als Ruckeln des Fahrzeuges wahrgenommen wird, wodurch sich der Fahrkomfort verschlechtert.

Ein Verfahren zum Betreiben eines Hybridfahrzeuges entsprechend dem Oberbegriff des Anspruchs 1 ist aus dem gatungsbildenden Dokument DE 103 27 306 A1 bekannt. Offenbarung der Erfindung Das erfindungsgemäße Verfahren zum Betreiben eines Hybridfahrzeuges mit den Merkmalen des Anspruchs 1 weist den Vorteil auf, dass eine weitgehende Kompensation des Start-Drehmomentes bzw. der Startleistung des Verbrennungsmotors erfolgt und somit der Fahrkomfort des Hybridfahrzeuges bei einem Start oder einem Stopp des Verbrennungsmotors verbessert wird. Dadurch, dass zum Start des zweiten Antriebsaggregates mindestens zwei Kupplungen in den schlupfenden Zustand geschaltet werden, werden die Auswirkungen des Starts des Verbrennungsmotors auf den Antriebsstrang verringert. Diese Kompensation betrifft nicht nur ein Beschleunigungs- oder Losbrechmoment, welches beim Start des zweiten Antriebsaggregates in Form eines Verbrennungsmotors infolge der Überwindung der Haftreibung oder der Mischreibung bei geringem Öldruck in Abhängigkeit von der Temperatur der Abstellzeit u.a. notwendig ist. Auch ein Verbrennungsmotormoment, welches bei den ersten Zündungen des Verbrennungsmotors entsteht und meist nur ungenau einstellbar ist, wird durch die Verwendung zweier schlupfend betriebener Kupplungen in seiner Auswirkung auf den Antriebsstrang verringert.

Unter dem Schlupf einer Kupplung wird dabei ein Zustand der Kupplung verstanden, bei welchem die am Eingang der Kupplung vorliegende Drehzahl ungleich zu der von der Kupplung am Ausgang abgegebenen Drehzahl ist, während Eingangs- und Ausgangsseite der Kupplung miteinander in einem Reibkontakt stehen.

Vorteilhafterweise werden die zwei Kupplungen nacheinander in den schlupfenden Zustand geschaltet. Auf diese Weise wird das zweite Antriebsaggregat allmählich an die Drehzahl herangeführt, bei welcher es eigenständig betriebsfähig ist.

Alternativ werden die zwei Kupplungen sequentiell überlagert in den schlupfenden Zustand geschaltet. Dadurch werden Sprünge in der Übertragung des Kupplungsmomentes verhindert und ein kontinuierliches Andrehen des zweiten Antriebsaggregates gewährleistet. Wenn gleichzeitig mehrere Kupplungen schlupfend betrieben werden, entsteht je Kupplung eine geringere Verlustleistung, d.h. jede Kupplung weist einen geringeren Verschleiß auf, weshalb klein dimensionierte Kupplungen eingesetzt werden können. Die bei der Reibung entstehende Wärme verteilt sich über die verschiedenen Kupplungen.

In einer Ausgestaltung weisen die Kupplungen unterschiedliche, separate Reibleistungen beim alleinigen Start beziehungsweise Beschleunigen des zweiten Antriebsaggregates auf. Im Folgenden wird als separate Reibleistung diejenige Reibleistung bezeichnet, die sich beim Start beziehungsweise Beschleunigen des zweiten Antriebsaggregates allein durch nur eine schlupfend betriebene Kupplung an dieser Kupplung momentan ergibt. Das von dieser Kupplung zu übertragende Drehmoment ist abhängig von dem gesamten zum Start beziehungsweise Beschleunigen des zweiten Antriebsaggregates erforderlichen Drehmoment und den Übersetzungsverhältnissen. Die separate Reibleistung ändert sich mit den Drehzahlen, insbesondere auch mit der aktuellen Drehzahl des zweiten Antriebsaggregates.

Die von den mehreren schlupfend betriebenen Kupplungen übertragenen Drehmomente können zusammen von dem ersten Antriebsaggregat kompensiert beziehungsweise zusätzlich aufgebracht werden. Dabei sind die Wirkrichtungen der von den schlupfend betriebenen Kupplungen übertragenen Drehmomente zu beachten.

Die von einer schlupfend betriebenen Kupplung erzeugte Reibleistung ergibt sich aus dem Produkt von dem Betrag der Differenzwinkelgeschwindigkeit und dem Betrag des von der schlupfend betriebenen Kupplung übertragenen Drehmoments. Die Differenzwinkelgeschwindigkeit ist die Differenz der Winkelgeschwindigkeiten zwischen der Eingangsseite und der Ausgangsseite der schlupfend betriebenen Kupplung.

Die Differenzwinkelgeschwindigkeit ist abhängig von den Drehzahlen des ersten und des zweiten Antriebsaggregats beziehungsweise den Drehzahlen im Abtrieb sowie den Übersetzungsverhältnissen. Neben dem Moment bzw. der Leistung zum Andrehen oder Beschleunigen des zweiten Antriebsaggregates muss das erste Antriebsaggregat auch die Reibleistung aufbringen, welche durch den schlupfenden Zustand der Kupplung in Wärme umgewandelt wird. Beide Anteile ergeben eine von dem ersten Antriebsaggregat aufzubringende Kompensationsleistung.

Durch die unterschiedlichen separaten Reibleistungen der Kupplungen ist es möglich, dass zum Andrehen des zweiten Antriebsaggregates die Kupplung, die aktuell die kleinste separate Reibleistung aufweist, schlupfend betrieben wird und das zweite Antriebsaggregat beschleunigt. Dadurch wird ein kontinuierliches Andrehen des zweiten Antriebsaggregates ermöglicht, mit geringen negativen Auswirkungen auf den Abtrieb und den Fahrkomfort des Hybridfahrzeuges und einer geringen vom dem ersten Antriebsaggregat aufzubringenden Kompensationsleistung.

Zur Beschleunigung des zweiten Antriebsaggregates muss die Ausgangsdrehzahl der mit dem Abtrieb des Hybridfahrzeugs verbundenen Ausgangsseite der Kupplung im schlupfenden Zustand oberhalb der Eingangsdrehzahl der mit dem zweiten Antriebsaggregat verbundenen Eingangsseite liegen.

In einer Weiterbildung der Erfindung wird zum Andrehen des zweiten Antriebsaggregates die Kupplung schlupfend betrieben, die das zweite Antriebsaggregat beschleunigt und dabei die aktuell kleinste separate Reibleistung aufweist. Damit liegt zum Losbrechen und zur Überwindung der ersten Kompressionen des zweiten Antriebsaggregates eine hohe Momentenübersetzung von dem ersten Antriebsaggregat auf der Ausgangsseite der Kupplung vor, da die direkt nach dem Andrehen zuerst komprimierenden Zylinder eines Verbrennungsmotors ein höheres Start-Drehmoment erfordern. Das erste Antriebsaggregat kann kleiner dimensioniert werden oder eine für den Start des zweiten Antriebsaggregates erforderliche Momentenreserve kann kleiner gewählt werden. Eine geringere Reibleistung führt zu einem geringeren Wärmeeintrag und Verschleiß, was die Lebensdauer der Kupplungen günstig beeinflusst.

In einer anderen Ausführungsform beschleunigt die zum Start des zweiten Antriebsaggregates zuerst schlupfend betriebene Kupplung das zweite Antriebsaggregat nicht bis zu dessen Leerlaufdrehzahl. Noch bevor das zweite Antriebsaggregat seine Leerlaufdrehzahl erreicht, ergibt sich ein Vorzeichenwechsel in der Differenz der Drehzahlen zwischen der Eingangsseite und der Ausgangsseite der zuerst schlupfend betriebenen Kupplung. Damit wechselt auch das Vorzeichen des von der Kupplung im schlupfenden Zustand übertragenen Drehmoments.

Vorteilhafterweise wird nach einem erfolgten Andrehen des zweiten Antriebsaggregates die beim Start des zweiten Antriebsaggregates zuerst schlupfend betriebene Kupplung wieder geöffnet, während die andere Kupplung schlupfend betrieben wird. Bei der Verwendung von mehreren Kupplungen ist es von Vorteil, wenn mit steigender Drehzahl des zweiten Antriebsaggregates beim Start nacheinander immer die Kupplung schlupfend betrieben wird, die das zweite Antriebsaggregat beschleunigt und dabei die kleinste separate Reibleistung aufweist.

In einer Ausgestaltung wird beim Erreichen einer Drehzahlgleichheit zwischen der Eingangsseite und der Ausgangsseite einer schlupfend betriebenen Kupplung diese aus dem schlupfenden Zustand zumindest teilweise wieder geöffnet. Bei einem Vorzeichenwechsel in der Differenz der Drehzahlen zwischen der Eingangsseite und der Ausgangsseite der Kupplung ergibt sich ein Vorzeichenwechsel und damit ein Sprung im von der Kupplung im schlupfenden Zustand übertragenen Drehmoment.

Wenn das zweite Antriebsaggregat den normalen Betrieb erreicht hat und aus eigener Kraft arbeitet, erfolgt eine starke Beschleunigung bzw. Erhöhung der Drehzahl des zweiten Antriebsaggregates, die zu einem Vorzeichenwechsel in der Differenz zwischen Eingangs- und Ausgangsdrehzahl führt, da sich jetzt die vom ersten und vom zweiten Antriebsaggregat aufgebrachten Drehmomente addieren. Dieser Sprung beim Vorzeichenwechsel des von der schlupfenden Kupplung übertragenen Drehmomentes wird durch die teilweise oder vollständige Öffnung der Kupplung klein gehalten oder ganz vermieden, da bei der vollständigen Öffnung der Kupplung die Reibkontakte, welche zwischen den beiden Kupplungsscheiben bestehen, und somit deren Wirkverbindung wieder aufgehoben werden.

In einer Weiterbildung wird zur Erkennung des Startendes bei der mindestens teilweise geöffneten Kupplung die Drehzahl des zweiten Antriebsaggregates ausgewertet. Ab dem Startende muss das zweite Antriebsaggregat nicht mehr geschleppt werden und gibt Leistung aus eigener Kraft ab.

Eine weitere Weiterbildung der Erfindung betrifft ein Verfahren zum Betreiben eines Hybridfahrzeuges, welches mindestens ein erstes und ein zweites Antriebsaggregat aufweist, bei welchem das zweite Antriebsaggregat durch wenigstens einen Teil des von dem ersten Antriebsaggregat aufgebrachten Antriebsmomentes gestoppt wird, in dem eine zwischen dem ersten und dem zweiten Antriebaggregat angeordnete Kupplung aus dem geschlossenen in einen schlupfenden Zustand gebracht wird. Um einen Stopp des zweiten Antriebsaggregates durch Aufbringen eines zusätzlichen Drehmomentes zu unterstützen und somit den Fahrkomfort des Hybridfahrzeuges bei einem Stopp des Verbrennungsmotors zu verbessern, werden zum Stopp des zweiten Antriebsaggregates mindestens zwei Kupplungen in den schlupfenden Zustand geschaltet. Dies hat den Vorteil, dass die Drehzahl des zweiten Antriebsaggregates kontinuierlich durch ein von einer Kupplung im schlupfenden Zustand übertragenes Drehmoment heruntergefahren wird. Das zweite Antriebsaggregat wird schneller gestoppt. Kinetische Energie des auslaufenden zweiten Antriebsaggregats wird für den Vortrieb des Fahrzeugs genutzt. Durch Beeinflussung des von der Kupplung im schlupfenden Zustand übertragenen Drehmoments werden Ungleichförmigkeiten in der Drehzahl des zweiten Antriebsaggregates beim Auslaufen, z.B. infolge von einzelnen Kompressionen, reduziert. Dies geschieht zum Beispiel, indem Ungleichförmigkeiten in der Drehzahl des zweiten Antriebsaggregates bei der Ansteuerung einer Kupplung berücksichtigt werden und sich auf das von einer Kupplung im schlupfenden Zustand übertragene Drehmoment auswirken. Schwingungen beziehungsweise ein "Schütteln" des Fahrzeugs lassen sich so minimieren und den Fahrkomfort steigern, insbesondere, wenn das erste Antriebsaggregat die von den schlupfenden Kupplungen aktuell übertragenen Drehmomente kompensiert.

Vorteilhafterweise werden die zwei Kupplungen nacheinander oder sequenziell überlagernd in den schlupfenden Zustand geschaltet. Dadurch werden Sprünge in der Übertragung des Kupplungsmoments verhindert und ein kontinuierliches Abdrehen des zweiten Antriebsaggregates gewährleistet. Auf diese Weise wird das zweite Antriebsaggregat allmählich an die gewünschte, langsamere Drehzahl herangeführt.

In einer Ausgestaltung wird nachdem eine Kupplung aus dem geschlossenen in einen schlupfenden oder geöffneten Zustand gebracht wurde, als weiteres zunächst die Kupplung, die aktuell die kleinste separate Reibleistung aufweist und die das zweite Antriebsaggregat abbremst, schlupfend betrieben. Auf diese Weise wird das zweite Antriebsaggregat kontinuierlich abgebremst. Wärmeeintrag und Verschleiß der Kupplung sind gering.

Das Stoppen des zweiten Antriebsaggregates kann auch durch den Einsatz mehrerer Kupplungen erfolgen, wobei nachdem eine Kupplung aus dem geschlossenen in einen schlupfenden oder geöffneten Zustand gebracht wurde, immer diejenige Kupplung schlupfend betrieben wird, die mit der aktuell kleinsten separaten Reibleistung das zweite Antriebsaggregat abbremst.

Eine andere Weiterbildung der Erfindung betrifft eine Vorrichtung zum Betreiben eines Hybridfahrzeuges, welches mindestens ein erstes und ein zweites Antriebsaggregat aufweist, bei welchem das zweite Antriebsaggregat durch wenigstens einen Teil des von dem ersten Antriebsaggregat aufgebrachten Antriebsmomentes gestartet oder gestoppt wird, indem eine zwischen dem ersten und dem zweiten Antriebaggregat angeordnete Kupplung aus dem geöffneten oder dem geschlossenen Zustand in einen schlupfenden Zustand gebracht wird. Um den Fahrkomfort des Hybridfahrzeuges bei einem Start oder einem Stopp des Verbrennungsmotors zu verbessern, sind Mittel vorhanden, welche zum Start oder zum Stopp des zweiten Antriebaggregates mindestens zwei Kupplungen in den schlupfenden Zustand schalten. Dies hat den Vorteil, dass die Auswirkungen des Starts oder Stopps des zweiten Antriebsaggregates auf den Antriebsstrang in Form von Drehschwingungen verringert werden, wodurch ein Ruckeln des Hybridfahrzeuges unterbunden wird.

Vorteilhafterweise ist das erste Antriebsaggregat auf einem ersten Teilgetriebe eines zwei Teilgetriebe aufweisenden Doppelkupplungsgetriebes angeordnet und das zweite, zu startende oder zu stoppende Antriebsaggregat über das Doppelkupplungsgetriebe mit dem Abtrieb des Hybridfahrzeuges verbunden. Mit Hilfe der an sich bekannten Doppelkupplungsgetriebe ist das Starten bzw. Stoppen des zweiten Antriebsaggregates besonders einfach auszuführen.

In einer Ausgestaltung sind das erste und das zweite Antriebsaggregat, die mindestens zwei Kupplungen und ein die Drehzahl des zweiten Antriebsaggregates detektierender Sensor mit einem Steuergerät zur Steuerung des Abläufe der Kupplungen zum Start oder Stopp des zweiten Antriebsaggregates verbunden. Das Steuergerät kann den Betrag des von der Kupplung im schlupfenden Zustand aktuell übertragenen Kupplungsmomentes durch Öffnen und Schließen der Kupplung bzw. der Variation der Anpresskraft der Kupplungsbeläge beeinflussen. Ob das zweite Antriebsaggregat gestartet oder gestoppt wird, hängt von der Wirkrichtung des aktuell übertragenen Kupplungsmomentes und somit vom Vorzeichen der Differenz zwischen der Eingangsdrehzahl und der Ausgangsdrehzahl der Kupplung ab.

Vorteilhafterweise ist das Steuergerät mit einer, die Übersetzung an der nicht schlupfend betriebenen Kupplung ändernden Schalteinheit verschaltet, welche an wenigstens einer Vorgelegewelle jedes Teilgetriebes angeordnet ist. Mit Hilfe dieser Schalteinheit wird die Übersetzung an der Vorgelegewelle geändert, welche mit der Kupplung verbunden ist, die sich zum Schaltzeitpunkt nicht im schlupfenden Zustand befindet. Somit ist ein Hochdrehen des zweiten Antriebsaggregates durch eine wechselweise Beaufschlagung der Kupplungen mit einer kleineren Übersetzung zuverlässig möglich, indem eine Kupplung schlupfend betätigt wird und die andere Kupplung an eine andere Übersetzung geschaltet wird. Anschließend wird die Kupplung mit der höheren Übersetzung schlupfend betrieben, während die erste Kupplung mit einer neuen Übersetzung beaufschlagt wird.

In einer Weiterbildung ist das erste Antriebsaggregat als Elektromotor und das zweite Antriebsaggregat als Verbrennungsmotor ausgebildet. Durch diese Anordnung wird es möglich, die Funktionalität des elektrischen Fahrens beizubehalten, da das elektrische Fahren sowohl eine nutzerfreundliche Fahrfunktion als auch eine Kraftstoffersparnis ermöglicht.

Die Erfindung lässt zahlreiche Ausführungsformen zu. Eine davon soll anhand der in der Zeichnung dargestellten Figuren näher erläutert werden.

Es zeigt:

Figur 1: Prinzipdarstellung eines Antriebsstranges eines Hybridfahrzeuges mit einem Doppelkupplungsgetriebe

Figur 2: Startablauf eines Verbrennungsmotors in einem Hybridfahrzeug bei Einsatz der Kupplungen des Doppelkupplungsgetriebes

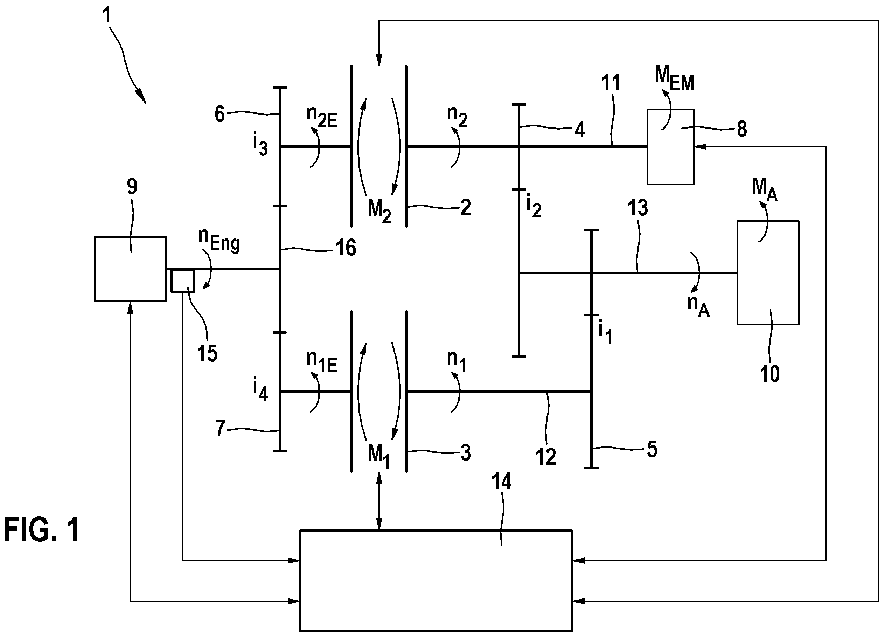

Figur 1 zeigt einen an sich bekannten Antriebsstrang 1 eines Hybridfahrzeuges mit einem Doppelkupplungsgetriebe 2, 3, 4, 5, 6, 7, 11, 12. Ein Elektromotor 8 und ein Verbrennungsmotor 9 sind an dem Doppelkupplungsgetriebe 2, 3, 4, 5, 6, 7, 11, 12 angeordnet, welches den Elektromotor 8 und den Verbrennungsmotor 9 mit den nicht weiter dargestellten Antriebsrädern des Fahrzeuges 10 verbindet.

Das Doppelkupplungsgetriebe 2, 3, 4, 5, 6, 7, 11, 12 weist zwei Zweige auf, wobei der erste Zweig eine erste Kupplung 2 und eine erste Vorgelegewelle 11 des Doppelkupplungsgetriebes 2, 3, 4, 5, 6, 7, 11, 12 umfasst.

Der zweite Zweig des Doppelkupplungsgetriebes 2, 3, 4, 5, 6, 7, 11, 12 enthält eine zweite Kupplung 3, welche auf eine zweite Vorgelegewelle 12 des Doppelkupplungsgetriebes 2, 3, 4, 5, 6, 7, 11, 12 führt.

Unter der Vorgelegewelle wird eine Welle verstanden, auf welche der Kraftfluß von einer Antriebswelle und wieder zurück auf eine Abtriebswelle verläuft.

Auf der ersten Vorgelegewelle 11 befinden sich die ungeraden Gänge, wie z.B. 1, 3, 5, 7, während auf der zweiten Vorgelegewelle 12 die geraden Gänge 2, 4, 6 angeordnet sind. Ist ein Gang eingelegt, kann auf der inaktiven Welle bereits der folgende Gang geschaltet werden. Durch Umkuppeln der beiden Vorgelegewellen 11, 12 mit Hilfe der Kupplungen 2 und 3 wird der Gang schnell gewechselt.

Der Verbrennungsmotor 9 ist über ein Zahnrad 16, das in zwei weitere Zahnräder 6, 7 greift, mit den Eingangsseiten der ersten und der zweiten Kupplung 2, 3 verbunden. Da der Einfachheit halber die Übersetzungen $i_3$ (Zahnräder 16, 6) und $i_4$ (Zahnräder 16, 7) beide als 1 angenommen werden,

$$i_3 = i_4 = 1 \tag{1},$$

rotieren die Eingangsseiten der Kupplungen 2, 3 mit den Drehzahlen $n_{2E}$ und $n_{1E}$, die der Drehzahl $n_{Eng}$ des Verbrennungsmotors 9 entsprechen:

$$n_{2E} = n_{1E} = n_{Eng} \tag{2}.$$

Der Elektromotor 8 ist an eine der beiden Vorgelegewellen 11, 12 angebunden. Im vorliegenden Fall erfolgt die Anbindung an die erste Vorgelegewelle 11, welche die ungeraden Gänge trägt. Durch diese Anordnung kann in bestimmten Betriebszuständen der Verbrennungsmotor 9 in einem anderen Gang, z.B. einem geraden Gang, betrieben werden als der Elektromotor 8, für welchen ein ungerader Gang eingelegt ist. Dadurch wird der Elektromotor 8 in einem wirkungsgradgünstigen Bereich betrieben, der sich vom wirkungsgradoptimierten Bereich des Verbrennungsmotors 9 unterscheidet.

Die Ausgangsseiten der beiden Kupplungen 2, 3 sind mit den beiden Vorgelegewellen 11, 12 verbunden, die über Zahnradstufen 4, 5 mit den Übersetzungen $i_2$, $i_1$ auf die Abtriebswelle 13 wirken und die nicht dargestellten Antriebsräder im Fahrzeug 10 antreiben. In Figur 1 sind der Einfachheit halber nur zwei Übersetzungsstufen bzw. zwei Gänge dargestellt. Im allgemeinen Fall werden mehrere schaltbare Zahnradstufen eingesetzt.

Für die Drehzahl $n_1$ der Vorgelegewelle 12 beziehungsweise der Ausgangsseite der Kupplung 3 und die Drehzahl $n_A$ der Abtriebswelle 13 gilt

$$n_A = n_1 / i_1 \tag{3}.$$

Für den Zusammenhang zwischen der Drehzahl $n_2$ der Vorgelegewelle 11 beziehungsweise der Ausgangsseite der Kupplung 2 und der Drehzahl $n_A$ der Abtriebswelle 13 gilt:

$$n_A = n_2 / i_2 \qquad\qquad (4).$$

Wie in Figur 1 dargestellt, liegt an der Vorgelegewelle 11 ein kleinerer Gang an (z.B. der erste Gang), während an der Vorgelegewelle 12 ein höherer Gang, beispielsweise der zweite Gang, anliegt. Die (positiven) Werte der Übersetzungen $i_1$, $i_2$ verhalten sich umgekehrt:

$$i_2 > i_1 \qquad\qquad (5).$$

Aus den Gleichungen (3), (4) und (5) ergibt sich, dass sich die Vorgelegewelle 12 langsamer dreht als die Vorgelegewelle 11, was bedeutet, dass

$$n_1 < n_2 \qquad\qquad (6).$$

Ein Steuergerät 14 ist zur Steuerung der Kupplungen 2, 3 mit diesen verbunden. Darüber hinaus führt das Steuergerät 14 an den Elektromotor 8 und den Verbrennungsmotor 9. Ein Drehzahlsensor 15 ist am Ausgang des Verbrennungsmotors 9 angeordnet und misst die Drehzahl $n_{Eng}$ des Verbrennungsmotors 9, welche an das Steuergerät 14 weitergeleitet wird. Weitere, nicht dargestellte Sensoren messen die Drehzahlen $n_1$, $n_2$ der Vorgelegewellen 12, 11 oder weitere Signale, welche auf die Drehzahlen $n_1$, $n_2$ der Vorgelegewellen 12, 11 schließen lassen und leiten diese an das Steuergerät 14 weiter.

Beim hybridischen Fahren ist eine der beiden Kupplungen 2, 3 geöffnet, während die andere Kupplung 2, 3 geschlossen ist. Ist beispielsweise die Kupplung 3 geschlossen, wirkt der Verbrennungsmotor 9 mit der Übersetzung $i_1$ auf die Abtriebswelle 13 und damit auf das Fahrzeug 10. Dann gilt

$$n_1 = n_{1E} = n_{Eng}$$

und mit Gleichung (3):

$$n_A = n_1 / i_1 = n_{Eng} / i_1$$

Der mit der Vorgelegewelle 11 verbundene Elektromotor 8 rotiert mit der Drehzahl $n_{EM}$, die der Drehzahl $n_2$ der Vorgelegewelle 11 entspricht und erzeugt ein Drehmoment $M_{EM}$. Beim rein elektrischen Fahren ist der Verbrennungsmotor 9 abgekoppelt, da beide Kupplungen 2, 3 geöffnet sind. Der Verbrennungsmotor 9 ist nicht im Betrieb, wobei gilt $n_{Eng} = 0$ U/min. Der Elektromotor 8 treibt das Fahrzeug 10 an, wobei mit Gleichung (4) für die Drehzahlen folgendes gilt:

$$n_2 = n_{EM}$$

$$n_A = n_2 / i_2 = n_{EM} / i_2 \ .$$

Für den Vortrieb des Fahrzeuges 10 steht das Abtriebsmoment $M_A = M_{EM} \times i_2$ zur Verfügung. Im Ausführungsbeispiel wird der Einfachheit halber von Wirkungsgraden $n = 1$ ausgegangen.

Ein Start des Verbrennungsmotors 9 erfolgt nun aus dem elektrischen Fahren heraus, indem die Kupplungen 2 und/oder 3 vom geöffneten Zustand in den schlupfenden Zustand gebracht werden. Eine Reibkupplung 2, 3 ist im Schlupf, wenn die Drehzahl auf der Eingangsseite der Kupplung verschieden zu der Drehzahl auf der Ausgangsseite der Kupplung ist, wobei die beiden Kupplungsscheiben miteinander in einem Reibkontakt stehen.

Im schlupfenden Zustand überträgt die Kupplung 3 ein Kupplungsmoment $M_1$ und die Kupplung 2 ein Kupplungsmoment $M_2$. Die von einer schlupfend betriebenen Kupplung 3, 2 erzeugte Reibleistung $P_{R1}$, $P_{R2}$ ergibt sich aus dem Produkt von dem Betrag der Differenzwinkelgeschwindigkeit zwischen Eingangs- und Ausgangsseite und dem Betrag des im schlupfenden Zustand aktuell übertragenen Kupplungsmoments $M_1$ bzw. $M_2$. Für die Reibleistung $P_{R1}$ der Kupplung 3 gilt

$$P_{R1} = \pi/30 \ \times \ |n_1 - n_{1E}| \ \times \ |M_1| \tag{7},$$

und für die Reibleistung $P_{R2}$ der Kupplung 2:

$$P_{R2} = \pi/30 \ \times \ |n_2 - n_{2E}| \ \times \ |M_2| \tag{8}.$$

Zum Starten des Verbrennungsmotors 9 ist ein Startdrehmoment $M_s$ erforderlich, das den Verbrennungsmotor 9 andreht und beschleunigt.

Im Folgenden wird als separate Reibleistung $P_{RS1}$, $P_{RS2}$ diejenige Reibleistung bezeichnet, die sich beim Start beziehungsweise Beschleunigen des Verbrennungsmotors 9 allein durch nur eine schlupfend betriebene Kupplung 3 oder 2 an dieser Kupplung 3 oder 2 momentan ergibt. Beim Start allein durch die Kupplung 3 gilt aufgrund der Gleichung (1)

$$M_1 = M_S \tag{9}$$

und mit den Gleichungen (2), (7) für die separate Reibleistung $P_{RS1}$ der Kupplung 3

$$P_{RS1} = \pi/30 \ \times \ |n_1 - n_{Eng}| \ \times \ |M_S| \tag{10}.$$

Beim Start allein durch die Kupplung 2 gilt aufgrund der Gleichung (1)

$$M_2 = M_S \tag{11}$$

und mit den Gleichungen (2), (8) für die separate Reibleistung $P_{RS2}$ der Kupplung 2

$$P_{RS2} = \pi/30 \ \times \ |n_2 - n_{Eng}| \ \times \ |M_S| \tag{12}.$$

Bei anderen Wirkprinzipien der Kupplungen, z.B. bei berührungslosen Wirbelstromkupplungen, ist anstatt der separaten Reibleistung die separate Verlustleistung zu betrachten.

Zur Beschleunigung des Verbrennungsmotors 9 durch die schlupfende Kupplung 3 muss die Ausgangsdrehzahl $n_1$ der mit dem Abtrieb verbundenen Ausgangsseite oberhalb der Eingangsdrehzahl $n_{1E} = n_{Eng}$ liegen.

Zur Beschleunigung des Verbrennungsmotors 9 durch die schlupfende Kupplung 2 muss die Ausgangsdrehzahl $n_2$ der mit dem Abtrieb verbundenen Ausgangsseite oberhalb der Eingangsdrehzahl $n_{2E} = n_{Eng}$ liegen.

Werden zum Start des Verbrennungsmotors 9 beide Kupplungen 2 und 3 vom geöffneten Zustand in den schlupfenden Zustand gebracht, so gilt der folgende Zusammenhang zwischen den im schlupfenden Zustand aktuell übertragenen Kupplungsmomenten $M_1$ bzw. $M_2$ der Kupplungen 3, 2 und dem Startdrehmoment $M_s$ des Verbrennungs-motors 9:

$$M_S = M_1 + M_2 \tag{13}.$$

Eine Momentenbilanz für die Abtriebswelle 13 ergibt folgenden Zusammenhang:

$$(M_{EM} - M_2) \ \times \ i_2 = M_A + M_1 \ \times \ i_1$$

oder

$$M_{EM} \ \times \ i_2 \ = \ M_A \ + \ M_1 \ \times \ i_1 \ + \ M_2 \ \times \ i_2 \tag{14}$$

oder

$$M_{EM} = M_A/i_2 + M_1 \times (i_1/i_2) + M_2 \qquad (15)$$

Wie bereits ausgeführt, ist ein bestimmtes Startdrehmoment $M_s$ des Verbrennungsmotors 9 erforderlich. Um dieses zu erzeugen, wird es zunächst durch die Kupplung 3 zur Verfügung gestellt, d.h. nach Gleichung (1) wird $M_1 = M_s$ gewählt. Die Kupplung 2 bleibt zunächst geöffnet, d.h. $M_2 = 0$ Nm. Wie aus Gleichung (15) ersichtlich, muss der Elektromotor 8 beim Übergang von der geöffneten zur schlupfend betriebenen Kupplung 3 einen zusätzlichen Kompensationsmomentenanteil in Höhe von $M_1 \times (i_1/i_2)$ beziehungsweise $M_s \times (i_1/i_2)$ erzeugen, um das Abtriebsmoment $M_A$ konstant zu halten. Nach Gleichung (5) ist der zusätzliche Kompensationsmomentenanteil $M_1 \times (i_1/i_2)$ kleiner als das von der Kupplung 3 im schlupfenden Zustand aktuell übertragene Kupplungsmoment $M_1$ beziehungsweise das Startdrehmoment $M_s$.

Würde zunächst ausschließlich die Kupplung 2 benutzt, so müsste nach Gleichung (1) im schlupfenden Zustand ein Kupplungsmoment von $M_2 = M_s$ gewählt werden. Dann müsste nach Gleichung (15) der Elektromotor 8 beim Übergang von der geöffneten zur schlupfend betriebenen Kupplung 2 einen zusätzlichen Kompensationsmomentenanteil in Höhe von $M_2$ beziehungsweise $M_s$ erzeugen.

Es ist günstiger, das Startdrehmoment $M_s$ des Verbrennungsmotors 9 zunächst durch die Kupplung 3 zur Verfügung zu stellen, der erforderliche zusätzliche Kompensationsmomentenanteil $M_s \times (i_1/i_2)$ fällt wegen Gleichung (5) kleiner aus.

Im allgemeinen Fall ist es beim Start günstig, von allen Kupplungen, welche den Verbrennungsmotor 9 beschleunigen können, d.h. deren jeweilige Ausgangsdrehzahl momentan über der jeweiligen Eingangsdrehzahl liegt, momentan diejenige zu benutzen, welche die kleinste separate Reibleistung aufweist. Der Elektromotor 8 muss zur Kompensation die für den Start, d.h. das Andrehen und Beschleunigen des Verbrennungsmotors 9 erforderliche Leistung $P_s$ mit

$$P_S = \pi/30 \times n_{Eng} \times M_S \qquad (16)$$

und zusätzlich die Reibleistung der schlupfenden Kupplung aufbringen. Die Kupplung mit der kleinsten separaten Reibleistung ist daher vorzuziehen.

Es besteht die Möglichkeit, dass beide Kupplungen 3, 2 den Verbrennungsmotor beschleunigen können, wenn die Ausgangsdrehzahl $n_1$ der Kupplung 3 oberhalb der Eingangsdrehzahl $n_{1E}$ liegt

$$n_1 > n_{1E.}$$

Mit den Gleichungen (2), (6) gilt dann

$$n_2 > n_1 > n_{1E} = n_{2E} = n_{Eng} \qquad (17).$$

Dann ist nach den Gleichungen (10) und (12) die separate Reibleistung $P_{RS1}$ der Kupplung 3 kleiner als die separate Reibleistung $P_{RS2}$ der Kupplung 2. Dies hat zur Folge, dass mit der kleineren Reibleistung auch der Wärmeeintrag und der Verschleiß der Kupplung geringer sind, wenn zum Andrehen des Verbrennungsmotors 9 zunächst die Kupplung 3 aktiv wird. Bei gleich großen Kupplungsmomenten $M_1$ und $M_2$ entsprechend den Gleichungen (9) und (11) liegt an der Kupplung 3 eine geringere Differenzdrehzahl vor.

Nach den Gleichungen (5) und (14) wirkt sich das von der Kupplung 3 aktuell übertragene Kupplungsmoment $M_1$ aufgrund der kleineren Übersetzung $i_1$ weniger auf das Abtriebsmoment $M_A$ aus, als das von der Kupplung 2 aktuell übertragene Kupplungsmoment $M_2$. Störungen und Ungenauigkeiten in den Kupplungsmomenten $M_1$, $M_2$, die zu einer nicht exakten Kompensation des Startdrehmoments $M_s$ durch den Elektromotor 8 führen, wirken sich weniger auf den Abtrieb aus, wenn die Kupplung 3 eingesetzt wird. Eine Ungenauigkeit im Kupplungsmoment $M_1$ der Kupplung 3 hat nach Gleichung (7) eine geringere Auswirkung auf die Reibleistung $P_{R1}$ der Kupplung 3 als dieselbe Ungenauigkeit im Kupplungsmoment $M_2$ der Kupplung 2 nach Gleichung (8) auf die Reibleistung $P_{R2}$ der Kupplung 2. Dabei sind Drehzahlverhältnisse nach Gleichung (17) vorausgesetzt. Mit einer geringeren Auswirkung einer Ungenauigkeit auf die Reibleistung ergibt sich auch eine geringere negative Auswirkung auf den Abtrieb und damit den Fahrkomfort, wenn die Kupplung 3 eingesetzt wird.

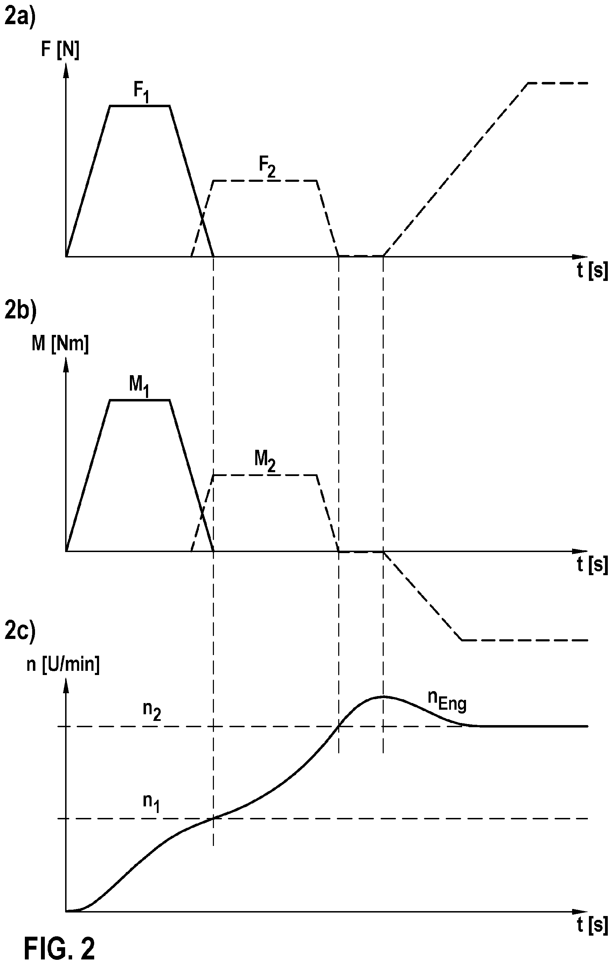

In Figur 2 ist der Ablauf eines Starts des Verbrennungsmotors in einem Hybridfahrzeug dargestellt. Bild 2a zeigt die Anpresskraft $F_2$ für die Reibbeläge der Kupplung 2 und die Anpresskraft $F_1$ für die Reibbeläge der Kupplung 3 über der Zeit t. Die daraus resultierenden, im schlupfenden Zustand aktuell übertragenen Kupplungsmomente $M_2$, $M_1$ über der Zeit t sind aus Bild 2b ersichtlich, während in Bild 2c die Drehzahlen $n_{Eng}$ des Verbrennungsmotors 9 und $n_1$ bzw. $n_2$ der Vorgelegewellen 12 und 11 dargestellt sind. Zunächst schaltet das Steuergerät 14 die geöffnete Kupplung 3 in den schlupfenden Betrieb, wodurch der Verbrennungsmotor 9 mit einer günstigen Momentenübersetzung angedreht wird. Die Kupplung 3 wird bis zum Erreichen der Drehzahlgleichheit $n_{Eng}$ = $n_1$ wieder vollständig geöffnet, um einen Momentensprung beim Vorzeichenwechsel der Differenz zwischen Ein- und Ausgangsdrehzahl zu vermeiden. Gleichzeitig mit dem Öffnen der Kupplung 3 erfolgt das Schließen der Kupplung 2, wobei die Kupplung 2 aus dem geöffneten Zustand ebenfalls in einen schlupfenden Zustand überführt wird, aber nicht vollständig geschlossen wird. Der schlupfende Zustand der Kupplung 2 in Richtung Wiederöffnen der Kupplung erfolgt dann bis zum Erreichen der Drehzahlgleichheit der Eingangsdrehzahl $n_{Eng}$ und der Ausgangsdrehzahl $n_2$ der Kupplung 2. Die Kupplung 2 ist wieder vollständig geöffnet, wenn $n_{Eng}$ = $n_2$. Dadurch, dass zu diesem Zeitpunkt beide Kupplungen 2,3 geöffnet sind, kann die Drehzahl $n_{Eng}$ des Verbrennungsmotors 9 infolge der ersten Verbrennungen überschwingen, ohne dass negative Auswirkungen auf die Abtriebswelle 13 infolge eines Momentensprungs auftreten. Danach gelangt die Kupplung 2 wieder in den schlupfenden Zustand, wodurch der Verbrennungsmotor 9 ein Drehmoment in die Abtriebswelle 13 einspeist. Bei Drehzahlgleichheit der Drehzahl $n_{Eng}$ des Verbrennungsmotors an der Eingangsseite der Kupplung 2 und der Drehzahl $n_2$ an der Ausgangsseite der Kupplung 2 wird die Kupplung 2 vollständig geschlossen und der Verbrennungsmotor 9 treibt das Fahrzeug 10 an.

Mittels geeigneter Kompensation der von den Kupplungen aktuell übertragenen Kupplungsmomente $M_2$, $M_1$ durch den Elektromotor 8 lässt sich das Abtriebsmoment $M_A$ während des gesamten Startvorganges einem vorgegebenen Sollwert entsprechend einstellen. Der Sollwert kann dabei beispielsweise vom Fahrer über ein Fahrpedal oder von einem Fahrerassistenzsystem eingestellt werden.

Beim Start des Verbrennungsmotors 9, nach dem Öffnen der Kupplung 3 und während sich die Kupplung 2 in einem schlupfenden Zustand befindet, ist die Vorgelegewelle 12 lastfrei. Dies kann ausgenutzt werden, um an der Vorgelegewelle 12 einen anderen Gang einzulegen. Damit kann die Kupplung 3 während des Startvorgangs ein weiteres Mal eingesetzt werden. Indem die Kupplung 2 sich wieder öffnet und die Kupplung 3 mit der nun geänderten Übersetzung den Verbrennungsmotor 9 weiter beschleunigt. Ebenso ist möglich, an der Vorgelegewelle 12 einen geeigneten Gang einzulegen, der dem gestarteten und antreibenden Verbrennungsmotor 9 eine für das Beschleunigungsvermögen des Fahrzeugs günstige Übersetzung bietet. Indem die Kupplung 2 sich wieder öffnet und der gestartete Verbrennungsmotor 9 über die Kupplung 3 mit der nun geänderten Übersetzung das Fahrzeug antreibt, lässt sich eine schnelle Reaktion des Antriebsstrangs auf einen vom Fahrer vorgegebenen Sollwert ermöglichen.

In einer weiteren Ausbildung erfolgt ein Andrehen (Start) des Verbrennungsmotors 9 aus dem elektrischen Fahren heraus, indem die Kupplung 3 vom geöffneten Zustand in den schlupfenden Zustand gebracht wird. Danach wird die Kupplung 3 wieder geöffnet, noch bevor der Verbrennungsmotor 9 seine Leerlaufdrehzahl erreicht hat. Der Verbrennungsmotor 9 erhöht seine Drehzahl durch Verbrennungen, also aus eigener Kraft. An der Vorgelegewelle 11 wird ein Gang eingelegt, der dem gestarteten Verbrennungsmotor 9 eine für das Antreiben des Fahrzeugs durch den Verbrennungsmotor 9 günstige Übersetzung bietet. Sobald der Verbrennungsmotor 9 eine ausreichend hohe Drehzahl erreicht hat, so dass $n_{2E}$ > $n_2$ ist, gelangt die Kupplung 2 in den schlupfenden Zustand, wodurch der Verbrennungsmotor 9 das Fahrzeug antreibt.

Von Vorteil ist, wenn während des elektrischen Fahrens die eingelegten Gänge basierend auf dem aktuellen Zustand des Antriebsstrangs so gewählt und nachgeführt werden, dass zum Start des Verbrennungsmotors 9 günstige Übersetzungsverhältnisse vorliegen. Die eingelegten Gänge ändern sich mit dem aktuellen Zustand des Antriebsstrangs. Der aktuelle Zustand des Antriebsstrangs ergibt sich insbesondere aus der Drehzahl $n_A$ der Abtriebswelle 13 und dem Abtriebsmoment $M_A$.

Das erfindungsgemäße Verfahren lässt sich vorteilhaft auch einsetzen, um den Verbrennungsmotor 9 aus dem elektrischen Fahren heraus anzukoppeln. Es erfolgt ein Andrehen und Beschleunigen des Verbrennungsmotors 9, indem die Kupplungen 2 und/oder 3 vom geöffneten Zustand in den schlupfenden Zustand gebracht werden, ohne dass Verbrennungen im Verbrennungsmotor 9 erfolgen. Dies ist zum Beispiel bei einer Fahrt im Gefälle sinnvoll, um das Schleppmoment des nicht verbrennenden Verbrennungsmotors 9 zum Bremsen des Fahrzeugs zu nutzen.

Auch bei Hybridantrieben, die einen Verbrennungsmotor 9 an einer Antriebsachse und einen oder mehrere weitere Antriebaggregate, vorzugsweise Elektromotoren 8, an einer weiteren Antriebsachse enthalten, wird das beschriebene Verfahren eingesetzt. Die Kompensation des Kupplung- bzw. Start-Drehmomentes erfolgt durch Kraftschluß über die Fahrbahn. Das Kompensationsmoment wird auch in dieser Ausführung auf Grund der günstigen Momentenübersetzung beim Andrehen des Verbrennungsmotors 9 gering gehalten. Damit wird ein entsprechender Start auch bei schlechten Kraftschlussbedingungen der Fahrbahn, wie bei Nässe oder Glätte, möglich.

**Patentansprüche**

1. Verfahren zum Betreiben eines Hybridfahrzeuges, welches mindestens ein erstes (8) und ein zweites Antriebsaggregat (9) aufweist, bei welchem das zweite Antriebsaggregat (9) durch wenigstens einen Teil des von dem ersten Antriebsaggregat (8) aufgebrachten Antriebsmomentes ($M_{EM}$) gestartet wird, indem eine zwischen dem ersten (8) und dem zweiten Antriebsaggregat (9) angeordnete Kupplung (2, 3) aus einem geöffneten in einen schlupfenden Zustand gebracht wird, wobei zum Start des zweiten Antriebsaggregates (9) mindestens zwei Kupplungen (2, 3) in den schlupfenden Zustand geschaltet werden, **dadurch gekennzeichnet, dass** die Kupplungen (2, 3) unterschiedliche, separate Reibleistungen aufweisen.

2. Verfahren nach Anspruch 1, **dadurch gekennzeichnet, dass** die zwei Kupplungen (2, 3) nacheinander in den schlupfenden Zustand geschaltet werden.

3. Verfahren nach Anspruch 1, **dadurch gekennzeichnet, dass** die zwei Kupplungen (2, 3) sequentiell überlagert in den schlupfenden Zustand geschaltet werden.

4. Verfahren nach Anspruch 1, **dadurch gekennzeichnet, dass** zum Andrehen des zweiten Antriebsaggregates (9) die Kupplung (2, 3), die aktuell die kleinste separate Reibleistung aufweist, schlupfend betrieben wird und das zweite Antriebsaggregat (9) beschleunigt.

5. Verfahren nach Anspruch 4, **dadurch gekennzeichnet, dass** die beim Start des zweiten Antriebsaggregates (9) zuerst schlupfend betriebene Kupplung (2, 3) das zweite Antriebsaggregat (9) nicht bis zu dessen Leerlaufdrehzahl beschleunigt.

6. Verfahren nach Anspruch 1 oder 4, **dadurch gekennzeichnet, dass** die beim Start des zweiten Antriebsaggregates (9) zuerst schlupfend betriebene Kupplung (2, 3) wieder geöffnet wird, während die andere Kupplung (2, 3) schlupfend betrieben wird.

7. Verfahren nach mindestens einem der vorhergehenden Ansprüche, **dadurch gekennzeichnet, dass** die schlupfend betriebene Kupplung (2,3) beim Erreichen der Drehzahlgleichheit zwischen der Eingangsseite und der Ausgangsseite der Kupplung (2, 3) aus dem schlupfenden Zustand zumindest teilweise wieder geöffnet wird.

8. Verfahren nach Anspruch 7, **dadurch gekennzeichnet, dass** zur Erkennung des Startendes bei der mindestens teilweise geöffneten Kupplung (2,3) die Drehzahl ($n_{Eng}$) des zweiten Antriebsaggregates (9) ausgewertet wird.

9. Vorrichtung zum Betreiben eines Hybridfahrzeuges, welches mindestens ein erstes (8) und ein zweites Antriebsaggregat (9) aufweist, bei welchem das zweite Antriebsaggregat (9) durch wenigstens einen Teil des von dem ersten Antriebsaggregat (8) aufgebrachten Antriebsmomentes ($M_{EM}$) gestartet wird, indem eine zwischen dem ersten (8) und dem zweiten Antriebaggregat (9) angeordnete Kupplung (2, 3) aus einem geöffneten Zustand in einen schlupfenden Zustand gebracht wird, , wobei Mittel (14) vorhanden sind, welche zum Start des zweiten Antriebsaggregates (9) mindestens zwei Kupplungen (2,3) in den schlupfenden Zustand schalten, **dadurch gekennzeichnet, dass** die Kupplungen (2, 3) unterschiedliche, separate Reibleistungen aufweisen

10. Vorrichtung nach Anspruch 9, **dadurch gekennzeichnet, dass** das erste Antriebsaggregat (8) auf einem ersten Teilgetriebe (4, 11) eines zwei Teilgetriebe aufweisenden Doppelkupplungsgetriebes (2, 3, 4, 5, 6, 7, 11, 12) angeordnet ist und das zweite, zu startende oder zu stoppende Antriebsaggregat (9) über das Doppelkupplungsgetriebe (2, 3, 4, 5, 6, 7, 11, 12) mit einem Abtrieb (13) des Hybridfahrzeuges verbunden ist.

11. Vorrichtung nach Anspruch 9 oder 10, **dadurch gekennzeichnet, dass** das erste (8) und das zweite Antriebsaggregat (9), die mindestens zwei Kupplungen (2, 3) und ein die Drehzahl ($n_{Eng}$) des zweiten Antriebsaggregates (9) detektierenden Sensor (15) mit einem Steuergerät (14) zur Steuerung der Abläufe der Kupplungen (2, 3) zum Start oder Stopp des zweiten Antriebsaggregates (9) verbunden sind.

12. Vorrichtung nach Anspruch 11, **dadurch gekennzeichnet, dass** das Steuergerät 14 mit einer, die Übersetzung der nicht schlupfend betriebenen Kupplung ändernde Schalteinheit verschaltet ist, welche an wenigstens einer Vorgelegewelle (11, 12) jedes Teilgetriebes (4, 11; 5, 13) angeordnet ist.

13. Vorrichtung nach mindestens einem der vorhergehenden Ansprüche 9, 10 oder 11, **dadurch gekennzeichnet,**

**dass** das erste Antriebsaggregat (8) als Elektromotor und das zweite Antriebsaggregat (9) als Verbrennungsmotor ausgebildet ist.

**Claims**

1. Method for operating a hybrid vehicle which has at least a first drive assembly (8) and a second drive assembly (9), in which the second drive assembly (9) is started by means of at least a portion of the drive torque ($M_{EM}$) which is applied by the first drive assembly (8), in that a clutch (2, 3) which is arranged between the first drive assembly (8) and the second drive assembly (9) is transferred from an open state into a slipping state, wherein in order to start the second drive assembly (9) at least two clutches (2, 3) are shifted to the slipping state, **characterized in that** the clutches (2, 3) have different separate frictional power levels.

2. Method according to Claim 1, **characterized in that** the two clutches (2, 3) are shifted successively into the slipping state.

3. Method according to Claim 1, **characterized in that** the two clutches (2, 3) are shifted in a sequentially superimposed fashion into the slipping state.

4. Method according to Claim 1, **characterized in that** in order to start the second drive assembly (9) the clutch (2, 3) which currently has the lowest separate frictional power level is operated in a slipping fashion, and the second drive assembly (9) is accelerated.

5. Method according to Claim 4, **characterized in that** the clutch (2, 3) which is firstly operated in a slipping fashion at the start of the second drive assembly (9) does not accelerate the second drive assembly (9) up to its idling speed.

6. Method according to Claim 1 or 4, **characterized in that** the clutch (2, 3) which is firstly operated in a slipping fashion at the start of the second drive assembly (9) is opened again, while the other clutch (2, 3) is operated in a slipping fashion.

7. Method according to at least one of the preceding claims, **characterized in that** the clutch (2, 3) which is operated in a slipping fashion is at least partially opened again from the slipping state when equality is reached between the rotational speed of the input side and that of the output side of the clutch (2, 3).

8. Method according to Claim 7, **characterized in that** the rotational speed ($n_{Eng}$) of the second drive assembly (9) is evaluated in order to detect the end of the start of the at least partially opened clutch (2, 3).

9. Device for operating a hybrid vehicle which has at least a first drive assembly (8) and a second drive assembly (9), in which the second drive assembly (9) is started by means of at least a portion of the drive torque ($M_{EM}$) which is applied by the first drive assembly (8), in that a clutch (2, 3) which is arranged between the first drive assembly (8) and the second drive assembly (9) is transferred from an open state into a slipping state, wherein means (14) are provided which shift at least two clutches (2, 3) into the slipping state in order to start the second drive assembly (9), **characterized in that** the clutches (2, 3) have different separate frictional power levels.

10. Device according to Claim 9, **characterized in that** the first drive assembly (8) is arranged on a first partial transmission (4, 11) of a double clutch transmission (2, 3, 4, 5, 6, 7, 11, 12) having two partial transmissions, and the second drive assembly (9), which is to be started or stopped, is connected via the double clutch transmission (2, 3, 4, 5, 6, 7, 11, 12) to an output (13) of the hybrid vehicle.

11. Device according to Claim 9 or 10, **characterized in that** the first drive assembly (8) and the second drive assembly (9), the at least two clutches (2, 3) and a sensor (15) which detects the rotational speed ($n_{Eng}$) of the second drive assembly (9) are connected to a control unit (14) for controlling the sequences of the clutches (2, 3) for the starting or stopping of the second drive assembly (9).

12. Device according to Claim 11, **characterized in that** the control unit (14) is connected to a shifting unit which changes the transmission ratio of the clutch which is not operated in a slipping fashion, which shifting unit is arranged on at least one lay shaft (11, 12) of each partial transmission (4, 11; 5, 13).

**13.** Device according to at least one of the preceding Claims 9, 10 or 11, **characterized in that** the first drive assembly (8) is embodied as an electric motor, and the second drive assembly (9) is embodied as an internal combustion engine.

**Revendications**

**1.** Procédé pour le fonctionnement d'un véhicule hybride, qui présente au moins un premier (8) et un deuxième groupe motopropulseur (9), dans lequel le deuxième groupe motopropulseur (9) est démarré par au moins une partie du couple d'entraînement ($M_{EM}$) appliqué par le premier groupe motopropulseur (8), en amenant un embrayage (2,3) disposé entre le premier (8) et le deuxième groupe motopropulseur (9) d'un état ouvert dans un état de patinage, au moins deux embrayages (2, 3) étant commutés dans l'état de patinage pour le démarrage du deuxième groupe motopropulseur (9), **caractérisé en ce que** les embrayages (2, 3) présentent des puissances de frottement séparées différentes.

**2.** Procédé selon la revendication 1, **caractérisé en ce que** les deux embrayages (2, 3) sont commutés l'un après l'autre dans l'état de patinage.

**3.** Procédé selon la revendication 1, **caractérisé en ce que** les deux embrayages (2, 3) sont commutés de manière séquentielle dans l'état de patinage.

**4.** Procédé selon la revendication 1, **caractérisé en ce que** pour faire tourner le deuxième groupe motopropulseur (9), l'embrayage (2, 3) qui présente la puissance de frottement séparée actuellement la plus petite est entraîné en patinage et le deuxième groupe motopropulseur (9) est accéléré.

**5.** Procédé selon la revendication 4, **caractérisé en ce que** l'embrayage (2, 3) fonctionnant d'abord en mode de patinage au démarrage du deuxième groupe motopropulseur (9), accélère le deuxième groupe motopropulseur (9) sans atteindre son régime de marche au ralenti.

**6.** Procédé selon la revendication 1 ou 4, **caractérisé en ce que** l'embrayage (2, 3) fonctionnant d'abord en mode de patinage au démarrage du deuxième groupe motopropulseur (9) est à nouveau ouvert tandis que l'autre embrayage (2, 3) est entraîné en mode de patinage.

**7.** Procédé selon au moins l'une quelconque des revendications précédentes, **caractérisé en ce que** l'embrayage entraîné en mode de patinage (2, 3), une fois atteinte l'égalité de vitesse de rotation entre le côté d'entrée et le côté de sortie de l'embrayage (2, 3), est à nouveau ouvert au moins en partie à partir de l'état de patinage.

**8.** Procédé selon la revendication 7, **caractérisé en ce que** pour reconnaître la fin du démarrage lorsque l'embrayage (2, 3) est au moins en partie ouvert, la vitesse de rotation ($n_{Eng}$) du deuxième groupe motopropulseur (9) est analysée.

**9.** Dispositif pour faire fonctionner un véhicule hybride, qui présente au moins un premier (8) et un deuxième groupe motopropulseur (9), dans lequel le deuxième groupe motopropulseur (9) est démarré par au moins une partie du couple d'entraînement ($M_{EM}$) appliquée par le premier groupe motopropulseur (8), en amenant un embrayage (2,3) disposé entre le premier (8) et le deuxième groupe motopropulseur (9) d'un état ouvert dans un état de patinage, des moyens (14) étant prévus, lesquels, au démarrage du deuxième groupe motopropulseur (9), commutent au moins deux embrayages (2, 3) dans l'état de patinage, **caractérisé en ce que** les embrayages (2, 3) présentent des puissances de frottement séparées différentes.

**10.** Dispositif selon la revendication 9, **caractérisé en ce que** le premier groupe motopropulseur (8) est disposé sur une première boîte de vitesses partielle (4, 11) d'une boîte de vitesses à double embrayage (2, 3, 4, 5, 6, 7, 11, 12) présentant une deuxième boîte de vitesses partielle et le deuxième groupe motopropulseur (9) devant être démarré ou arrêté est connecté par le biais de la boîte de vitesses à double embrayage (2, 3, 4, 5, 6, 7, 11, 12) à une prise de force (13) du véhicule hybride.

**11.** Dispositif selon la revendication 9 ou 10, **caractérisé en ce que** le premier (8) et le deuxième groupe motopropulseur (9), les au moins deux embrayages (2, 3) et un capteur (15) détectant la vitesse de rotation ($n_{Eng}$) du deuxième groupe motopropulseur (9) sont connectés à un appareil de commande (14) pour commander les opérations des embrayages (2, 3) pour le démarrage ou l'arrêt du deuxième groupe motopropulseur (9).

**12.** Dispositif selon la revendication 11, **caractérisé en ce que** l'appareil de commande 14 est mis en circuit avec une unité de commutation modifiant le rapport de transmission de l'embrayage ne fonctionnant pas en mode de patinage, laquelle unité de commutation est disposée au niveau d'au moins un arbre intermédiaire (11, 12) de chaque boîte de vitesses partielle (4, 11 ; 5, 13).

**13.** Dispositif selon au moins l'une quelconque des revendications précédentes 9, 10 ou 11, **caractérisé en ce que** le premier groupe motopropulseur (8) est réalisé sous forme de moteur électrique et le deuxième groupe motopropulseur (9) est réalisé sous forme de moteur à combustion interne.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10327306 A1